# EUROPEAN PATENT APPLICATION

(11) **EP 4 618 075 A1**
(43) Date of publication of application: **17.09.2025**
(21) Application number: 24382264.0
(22) Date of filing: 12.03.2024
(51) Int. Cl.: G10L 15/22, G10L 15/28, H04R 1/08

(54) **VOICE-BASED INTERACTION SYSTEM AND METHOD**

(71) Applicant: 4i Intelligent Insights S.L., 41005 Sevilla (ES)
(72) Inventor: Pérez García, Guillermo, 41005 Sevilla (ES); de Amores Carredano, José Gabriel, 41005 Sevilla (ES); Cano Montes, Antonio, 41005 Sevilla (ES); Castro Malet, Manuel, 41005 Sevilla (ES)
(74) Representative: Clarke, Modet y Cía., S.L.

(57) **Abstract**

Voice-based interaction system and method. The system (100) comprises a person location unit (8) configured to detect people in a zone of interest (4) and obtain a location (9a, 9b) of each person (11a, 11b) detected in the zone of interest (4); a plurality of directional microphones (5a, 5b); a speech recognition module (12) configured to receive an input audio signal (19a, 19b) from each one of the directional microphones (5a, 5b); a driving module (6) configured to move each directional microphone (5a, 5b) independently; and a control unit (10) configured to receive the location (9a, 9b) of each person (11a, 11b) detected in the zone of interest (4), assign each directional microphone (5a, 5b) to a different person (11a, 11b), and actuate the driving module (6) so that each directional microphone (5a, 5b) is directed towards the location (9a, 9b) of the assigned person (11a, 11b).

## Description

### FIELD OF THE INVENTION

The present invention relates to voice-based interaction systems with speech recognition for human-machine interaction (HMI). The HMI may include sending voice commands to perform some actions (e.g. instruct a robot to move, order an intelligent loudspeaker to turn on the lights) or having a conversation with a machine, among other interactions.

### BACKGROUND OF THE INVENTION

Existing voice-based interaction systems include speech recognition solutions with human-like performance. These systems range from smart speakers (like Amazon's Alexa) to full-fledged robots (like Hanson's Sophia).

However, all these solutions struggle when deployed in scenarios with multiple people speaking. They are often unable to distinguish which utterances are directed to the voice-based interaction system from other utterances from unrelated background conversations. Also, in multiparty conversations, they don't know who among the speakers said the last utterance and whether this utterance was directed to the voice-based interaction system or to another person in the group.

The present invention solves these problems, providing a voice-based interaction system that receives much cleaner audio signals from multiple speakers and thus has an improved speech recognition performance.

### SUMMARY OF THE INVENTION

The present invention refers to a voice-based interaction system and method that solves the aforementioned problems.

The voice-based interaction system comprises a control unit; a person location unit configured to detect people in a zone of interest and obtain a location of each person detected in the zone of interest; a plurality of directional microphones; a speech recognition module configured to receive an input audio signal from each one of the directional microphones; a driving module configured to move each directional microphone independently. The control unit is configured to receive the location of each person detected in the zone of interest, assign each directional microphone to a different person, and actuate the driving module so that each directional microphone is directed towards the location of the assigned person.

The voice-based interaction method comprises detecting one or more persons in a zone of interest; obtaining a location of each person detected in the zone of interest; assigning each one of a plurality of directional microphones to a different detected person; aiming each directional microphone at the location of the corresponding assigned person; and applying speech recognition to an input audio signal acquired by each one of the directional microphones to obtain an input utterance. The directional microphones employed by the system are a plurality of independent microphones (not a monolithic microphone array), each one with its own acquired audio signal.

The present invention improves the speech recognition since each speaker has a dedicated directional microphone pointing at him/her and, therefore, the speech recognition module receives much cleaner audio signals.

### BRIEF DESCRIPTION OF THE DRAWINGS

A series of drawings which aid in better understanding the invention and which are expressly related with an embodiment of said invention, presented as a non-limiting example thereof, are very briefly described below.
Figure 1 depicts a voice-based interaction system according to an embodiment.
Figure 2 depicts a voice-based interaction system according to another embodiment.
Figure 3 depicts a flow diagram of a voice-based interaction method according to an embodiment.

### DETAILED DESCRIPTION OF THE INVENTION

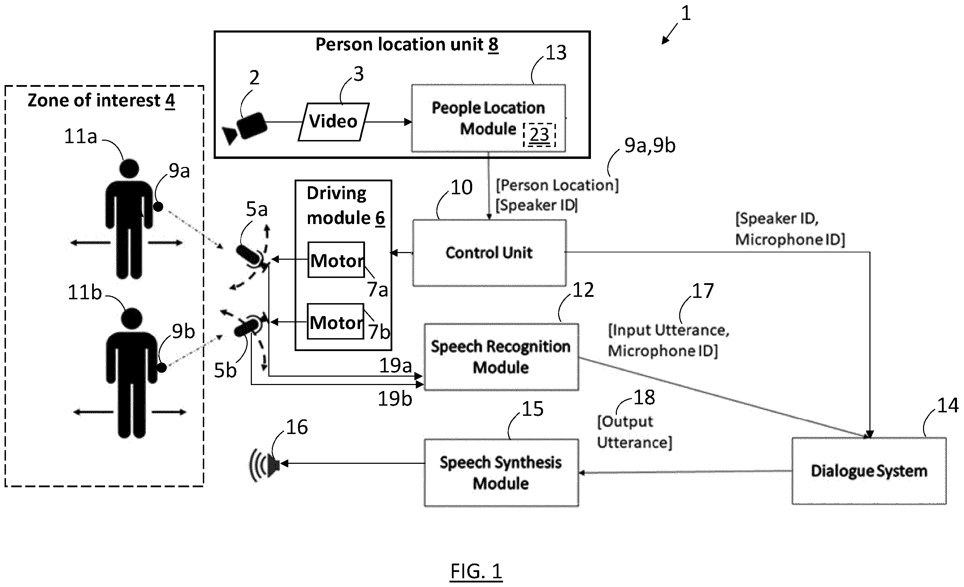

**Figure 1** shows a voice-based interaction system 1 according to an embodiment. The voice-based interaction system 1 comprises:
- A person location unit 8 configured to detect people in a scene or zone of interest 4 and obtain a location (9a, 9b) of each person (11a, 11b) detected in the zone of interest 4.
- A plurality of directional microphones (5a, 5b).
- A speech recognition module 12, wired or wirelessly connected to the directional microphones (5a, 5b), and configured to receive an input audio signal (19a, 19b) from each one of the directional microphones (5a, 5b).
- Driving means, implemented in a driving module 6, configured to move each directional microphone (5a, 5b) independently, the directional microphones (5a, 5b) being aimed at configurable positions of the zone of interest 4.
- A control unit 10 configured to receive the location (9a, 9b) of each person (11a, 11b) detected in the zone of interest 4, assign each directional microphone (5a, 5b) to a different person (11a, 11b), and actuate the driving module 6 so that each directional microphone (5a, 5b) is directed or aimed towards the location (9a, 9b) of the assigned person (11a, 11b).

In the example depicted in Figure 1, two persons (a first person 9a and a second person 9b) are detected by the person location unit 8 in the zone of interest 4, and the voice-based interaction system 1 includes a first directional microphone 5a and a second directional microphone 5b. The control unit 10 assigns each one of the directional microphones (5a, 5b) to a different person (11a, 11b); for example, as shown in Figure 1, the first directional microphone 5a is assigned to the first person 9a, and the second directional microphone 5b is assigned to the second person 9b.

Should the number of microphones be greater than the number of persons detected in the zone of interest 4, the exceeding microphones can become temporarily unassigned to a person or can be assigned to persons who already have an assigned microphone (in the latter case, a person may have more than one assigned microphone). For instance, when only one person is detected in the system of Figure 1, the first directional microphone 9a is assigned to said person, whereas the second directional microphone 9b remains unassigned. Alternatively, both microphones could be assigned to the detected person, and the speech recognition module may use the input audio signals (19a, 19b) coming from both directional microphones (5a, 5b) to improve the speech recognition.

If the number of microphones is lower than the number of persons detected in the zone of interest 4 (e.g. two microphones and three persons), the exceeding person(s) remain unassigned. In an embodiment, to determine the unassigned persons the person location unit 8 may include a vision module with one or more cameras 2 that acquire video images showing the face of the persons in the scene and a speak detector unit 23 that analyzes the video and detects whether each person detected in the video is speaking or is silent. A microphone is not assigned to the persons who are not speaking. When a person who has no microphone assigned starts speaking, the system preferably automatically assigns him/her a microphone applying a predefined policy. This policy could be, for instance, LRU (Least Recently Used, assigning the microphone of the speaker who has not spoken for a longer time), LFU (Least Frequently Used, assigning the microphone of the speaker that is speaking less in average) or any combination or alternative policy.

The person location unit 8 could be implemented in several ways. People detection performed by the person location unit 8 could be based on computer vision techniques, processing the video input from one or more cameras and applying people detection and person tracking algorithms, like current deep learning models based on large neural networks. Optionally, the cameras could have depth estimation, infrared detection, or other advanced capabilities for better performance.

Alternatively, the person location strategy could be based on sound source estimation or even in indirect cues, like smartphone signal location (assuming that each person is carrying on such devices). The person location unit 8 may also combine any of these different strategies (computer vision techniques, sound source estimation techniques, etc.) to optimize the precision of the location module.

In the embodiment shown in Figure 1, the person location unit 8 comprises a camera 2 covering the area where the speakers may be located (i.e. covered area or zone of interest 4), although more than one camera 2 may be employed. The camera 2 is configured to capture video 3 from the zone of interest 4, and a people location module 13 is configured to detect and track people in the video 3 using any known detection and tracking algorithm.

The driving module 6 preferably comprises an actuator (7a, 7b) per directional microphone (5a, 5b). As depicted in Figure 1, the actuators (7a, 7b) may be, for instance, motors (e.g. stepper motors). The actuators (7a, 7b) can move the corresponding directional microphone (5a, 5b) independently from the other directional microphones, according to at least one degree of freedom, e.g by rotating the microphone around a rotation axis or by moving the microphone between two or more linearly arranged positions. The actuators (7a, 7b) attached to the directional microphones (5a, 5b) could be of any type provided they have at least one degree of freedom, represented in Figure 1 with dashed lines. When activated, the actuators (7a, 7b) may change the position and/or orientation of the directional microphones (5a, 5b) such that they are aimed at configurable positions of the zone of interest 4.

In an embodiment, each actuator (7a, 7b) is configured to move the corresponding microphone (5a, 5b) according to at least two degrees of freedom including a pitch angle (i.e. rotation around the side-to-side axis of the microphone) and a yaw angle (i.e. rotation around a vertical axis). Three degrees of freedom (pitch, yaw, and roll) could also be used. Actuators with low resource consumption would be preferred for unplugged deployments like stand-alone robots. The chosen actuators preferably move smoothly, generating low background noise to minimize its impact on the speech recognition module 12.

The person location unit 8 may continuously detect and track people in the zone of interest 4, and the control unit 10 may thus also correspondingly update the position and/or orientation of the directional microphones (5a, 5b) such that they are continuously directed to the different detected people, following their moves within the zone of interest 4.

The speech recognition module 12, which is configured to convert the input audio signals (19a, 19b) coming from the directional microphones (5a, 5b) into text (input utterance 17), could be any one in the market and employ any known speech recognition technique, like current solutions based on large language models.

Since each person (speaker, when talking) on the scene will have a dedicated directional microphone pointing at him/her, the voice-based interaction system 1 will receive much cleaner audio signals, improving the speech recognition performance of the speech recognition module 12. When receiving the input audio signals (19a, 19b) from the loudspeakers (5a, 5b), the speech recognition module 12 will use the audio signal with which the text conversion is better, i.e. the cleanest audio signal acquired by the microphone that is aimed at the speaker. In an embodiment, the people location module 13 may include a speak detector unit 23 that analyzes the video 3 and detects which person is speaking. In this case, the people detection module 13 outputs the speaker identification ("Speaker ID" in Figure 1) together with the location (9a, 9b) of each person detected in the video 3. For instance, the output may be: {(person 1, location 1), (person 2, location 2); speaker=person 2}. In this case, the speech recognition module 12 would use the input audio signal captured by the directional microphone assigned to the speaker (e.g. second input audio signal 19b).

In an embodiment, the people location module 13 comprises the speak detector unit 23 configured to repeatedly detect the person who is speaking (the speaker) in the video 3 and, if one or more speakers are detected, repeatedly send at least one speaker identification to the control unit 10. The control unit 10 is preferably configured to assign the directional microphones (5a, 5b) to the different persons in the scene based on the information received regarding the speaker identification, according to a predefined policy (e.g. considering the speaker identifications received in a predetermined time interval). The directional microphones can be assigned, for instance, giving preference to the persons who spoke the latest in the video (e.g. the two directional microphones in Figure 1 are assigned to the two persons in the zone of interest 4 who spoke the latest, the rest of the persons in the zone of interest 4 remaining temporarily unassigned). This configuration is useful when there are more persons (11a, 11b) in the zone of interest 4 than directional microphones (5a, 5b). This way, currently speaking persons can always have an assigned microphone, independently on the number of persons in the zone of interest 4 and the number of microphones present in the system 1.

The input utterance 17 may be a command sent by a user to the voice-based interaction system 1 for execution (e.g. a command to set a certain temperature in the room). When used for conversational purposes, the voice-based interaction system 1 may further comprise a dialogue system 14, a speech synthesis module 15 and at least one loudspeaker 16 (Figure 1 depicts only one loudspeaker). The dialogue system 14 may be configured to receive the input utterance 17 (a text string) from the speech recognition module 12, generate an output utterance 18 (a text string) in response to the input utterance 17, and send the output utterance 18 to the speech synthesis module 15, which generates an output speech that is played in the loudspeaker 16. The dialogue system 14 could also be any one in the market and employ any known technique. A dialogue system 14 designed for multiparty conversations could benefit from the additional information provided by the control unit 12, which can assign a microphone channel to an individual speaker. The present invention provides a robust dialogue interaction by assigning moving microphones to speakers.

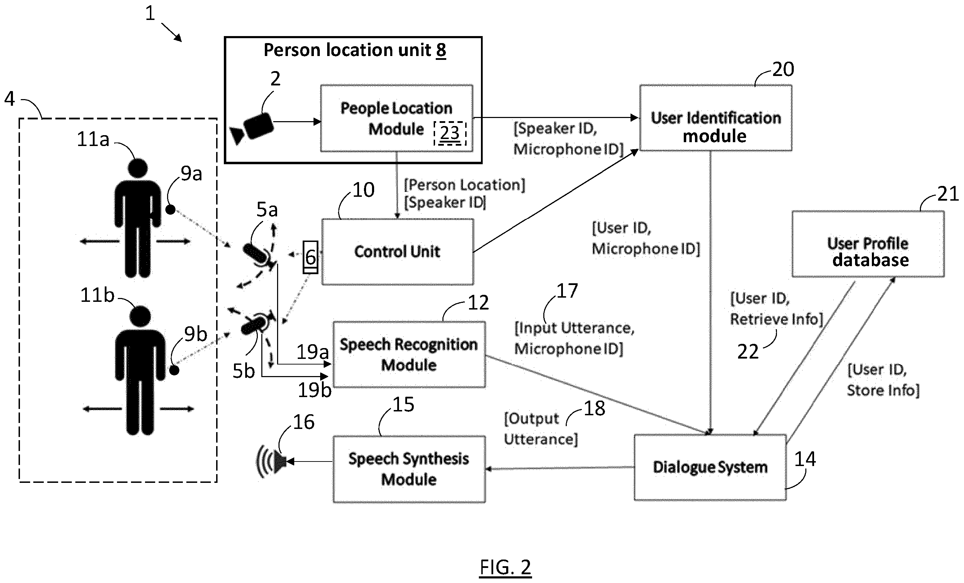

**Figure 2** depicts another embodiment with an advanced feature including a person identification solution and a user profile stored as persistent memory. This additional feature would allow the voice-based interaction system 1 to remember users from previous conversations and use all the information previously gathered from that particular user in the dialogue.

In this embodiment, the voice-based interaction system 1 further comprises a user identification module 20, configured to identify each person (11a, 11b) detected in the zone of interest 4, and a user profile database 21. The dialogue system 14 is configured to retrieve information 22 of each identified person stored in the user profile database 21 and generate the output utterance 18 using the retrieved information 22.

The user identification could be based in biometric techniques like face identification or voice print. The user profile could be stored as any type of persistent data storage like a database of RDF triplets.

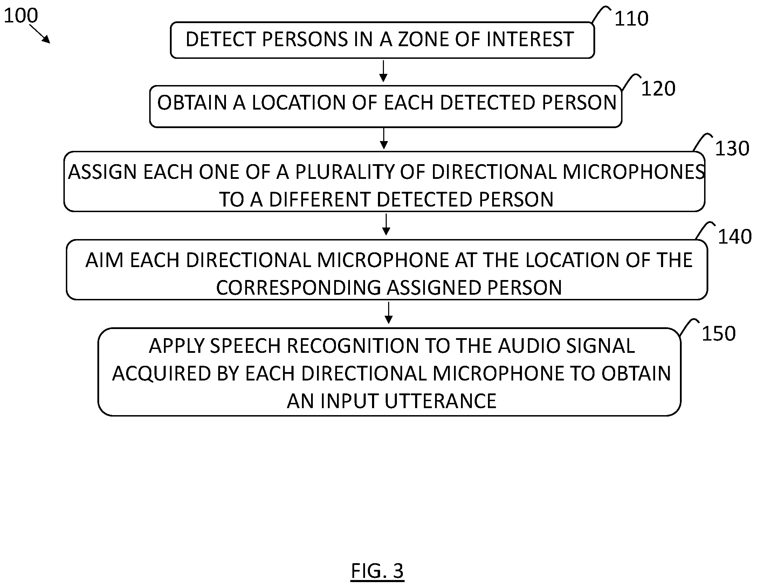

**Figure 3** depicts a flow diagram of a voice-based interaction method 100 according to an embodiment of the present invention. The method 100 comprises detecting 110 one or more persons (19a, 19b) in a zone of interest 4; obtaining 120 a location (9a, 9b) of each person (11a, 11b) detected in the zone of interest 4; assigning 130 each one of a plurality of directional microphones (5a, 5b) to a different detected person (11a, 11b); directing or aiming 140 each directional microphone (5a, 5b) towards the location (9a, 9b) of the corresponding assigned person (11a, 11b); and applying 150 speech recognition to an input audio signal (19a, 19b) acquired by each one of the directional microphones (5a, 5b) to obtain an input utterance 17.

The step of detecting 110 one or more persons in the zone of interest 4 may comprises acquiring, by at least one camera 2, video 3 from the zone of interest 4; detecting persons in the video 3; and tracking the detected persons in the video 3. The method 100 may further comprise repeatedly detecting a speaker in the video 3, wherein the directional microphones (5a, 5b) are assigned 130 to the persons in the zone of interest 4 based on the detection of speaker(s) in the video 3 (e.g. taking into account the last X detected speakers, or the speakers detected in the last Y seconds, or the frequency of each speaker in the last Z seconds).

The step of aiming 140 each directional microphone (5a, 5b) may comprise moving and/or rotating the directional microphone according to at least one degree of freedom, preferably according to at least two degrees of freedom including a pitch angle and a yaw angle.

The method 100 may further comprise generating an output utterance 18 in response to the input utterance 17; applying speech synthesis to the output utterance 18 to generate an output speech; and playing the output speech in at least one loudspeaker 16. The step of generating the output utterance 18 may comprise identifying each person (11a, 11b) detected in the zone of interest 4; retrieving information 22 of each identified person stored in a user profile database 21; and generating the output utterance 18 using the retrieved information 22.

## Claims

1. A voice-based interaction system, comprising:
a person location unit (8) configured to detect people in a zone of interest (4) and obtain a location (9a, 9b) of each person (11a, 11b) detected in the zone of interest (4);
a plurality of directional microphones (5a, 5b);
a speech recognition module (12) configured to receive an input audio signal (19a, 19b) from each one of the directional microphones (5a, 5b);
a driving module (6) configured to move each directional microphone (5a, 5b) independently; and
a control unit (10) configured to:
receive the location (9a, 9b) of each person (11a, 11b) detected in the zone of interest (4);
assign each directional microphone (5a, 5b) to a different person (11a, 11b); and
actuate the driving module (6) so that each directional microphone (5a, 5b) is directed towards the location (9a, 9b) of the assigned person (11a, 11b).

2. The voice-based interaction system of claim 1, wherein the person location unit (8) comprises at least one camera (2) configured to capture video (3) from the zone of interest (4), and a people location module (13) configured to detect and track people in the video (3).

3. The voice-based interaction system of claim 2, wherein the people location module (13) comprises a speak detector unit (23) configured to repeatedly detect a speaker in the video (3) and send a speaker identification to the control unit (10); and wherein the control unit (10) is configured to assign the directional microphones (5a, 5b) to the persons in the zone of interest (4) based on the information received regarding the speaker identification.

4. The voice-based interaction system of any preceding claim, wherein the driving module (6) comprises an actuator (7a, 7b) per directional microphone (5a, 5b), wherein each actuator (7a, 7b) is configured to move the corresponding directional microphone (5a, 5b) according to at least one degree of freedom.

5. The voice-based interaction system of claim 4, wherein each actuator (7a, 7b) is configured to move the corresponding directional microphone (5a, 5b) according to at least two degrees of freedom including a pitch angle and a yaw angle.

6. The voice-based interaction system of any preceding claim, further comprising a dialogue system (14), a speech synthesis module (15) and at least one loudspeaker (16); and wherein the dialogue system (14) is configured to:
receive from the speech recognition module (12) an input utterance (17);
generate an output utterance (18) in response to the input utterance (17); and
send the output utterance (18) to the speech synthesis module (15) for reproduction in the at least one loudspeaker (16).

7. The voice-based interaction system of claim 6, further comprising a user identification module (20) configured to identify each person (11a, 11b) detected in the zone of interest (4);
and wherein the dialogue system (14) is configured to retrieve information (22) of each identified person stored in a user profile database (21) and generate the output utterance (18) using the retrieved information (22).

8. A voice-based interaction method, comprising:
detecting (110) one or more persons (11a, 11b) in a zone of interest (4);
obtaining (120) a location (9a, 9b) of each person (11a, 11b) detected in the zone of interest (4);
assigning (130) each one of a plurality of directional microphones (5a, 5b) to a different detected person (11a, 11b);
aiming (140) each directional microphone (5a, 5b) at the location (9a, 9b) of the corresponding assigned person (11a, 11b); and
applying (150) speech recognition to an input audio signal (19a, 19b) acquired by each one of the directional microphones (5a, 5b) to obtain an input utterance (17).

9. The voice-based interaction method of claim 8, wherein detecting one or more persons in the zone of interest (4) comprises:
acquiring, by at least one camera (2), video (3) from the zone of interest (4);
detecting persons in the video (3); and
tracking the detected persons in the video (3).

10. The voice-based interaction method of claim 9, further comprising repeatedly detecting a speaker in the video (3); and wherein the directional microphones (5a, 5b) are assigned (130) to the persons in the zone of interest (4) based on the speaker detection in the video (3).

11. The voice-based interaction method of any of claims 8 to 10, wherein aiming each directional microphone (5a, 5b) comprises moving and/or rotating the directional microphone according to at least one degree of freedom.

12. The voice-based interaction method of claim 11, wherein aiming each directional microphone (5a, 5b) comprises moving and/or rotating the directional microphone according to at least two degrees of freedom including a pitch angle and a yaw angle.

13. The voice-based interaction method of any of claims 8 to 12, further comprising:
generating an output utterance (18) in response to the input utterance (17);
applying speech synthesis to the output utterance (18) to generate an output speech; and
playing the output speech in at least one loudspeaker (16).

14. The voice-based interaction method of claim 13, wherein generating the output utterance (18) comprises:
identifying each person (11a, 11b) detected in the zone of interest (4);
retrieving information (22) of each identified person stored in a user profile database (21); and
generating the output utterance (18) using the retrieved information (22).
